# EUROPÄISCHE PATENTSCHRIFT

(11) **EP 2 225 806 B1**
(45) Veröffentlichungstag und Bekanntmachung des Hinweises auf die Patenterteilung: **15.06.2011**
(21) Anmeldenummer: 08804852.5
(22) Anmeldetag: 29.09.2008
(51) Int. Cl.: H01R 39/38, H02K 5/14

(54) **ELEKTRISCH ANTREIBBARE HANDWERKZEUGMASCHINE**
ELECTRICALLY DRIVEN HAND-HELD POWER TOOL
MACHINE-OUTIL À MAIN À COMMANDE ÉLECTRIQUE

(30) Priorität: 27.11.2007 DE 102007057033
(43) Veröffentlichungstag der Anmeldung: 08.09.2010
(73) Patentinhaber: Robert Bosch GmbH, 70442 Stuttgart (DE)
(72) Erfinder: ESENWEIN, Florian, 73066 Uhingen-holzhausen (DE); HOFMANN, Albrecht, 71144 Steinenbronn (DE)
(86) Internationale Anmeldenummer: PCT/EP2008/062990
(87) Internationale Veröffentlichungsnummer: WO 2009/068340

(56) Entgegenhaltungen:
- EP-A- 0 413 849
- JP-A- 11 164 522
- JP-A- 2000 324 765
- JP-A- 2007 015 063
- US-A- 4 638 204
- US-A1- 2002 125 786

## Beschreibung

Die Erfindung bezieht sich auf eine elektrisch antreibbare Handwerkzeugmaschine nach dem Oberbegriff des Anspruches 1.

### Stand der Technik

In der DE 10 2004 050 798 A1 wird eine Handwerkzeugmaschine mit oszillierend antreibbarer Antriebswelle beschrieben, die elektromotorisch angetrieben wird. Hierzu ist im Gehäuse der Handwerkzeugmaschine ein Elektromotor angeordnet, der über eine Motorwelle eine Exzenterscheibe antreibt, in die ein mit der Antriebswelle drehfest verbundener Arm eingreift zur Umsetzung der Drehbewegung der Exzenterscheibe in eine oszillatorische Bewegung der Antriebswelle.

In der Regel werden in derartigen Handwerkzeugmaschinen Universalmotoren als elektrischer Antrieb eingesetzt, die mit Wechselstrom betrieben werden und zur Stromwendung mit einem ankerfesten Kommutator versehen sind, der von gehäusefesten Bürsten kontaktiert wird, um Strom auf die Ankerwicklung zu übertragen. Aufgrund der gleitenden Bewegung unterliegen die Bürsten einem Verschleiß und müssen zu Wartungszwecken ausgetauscht werden. Es muss daher Sorge getragen werden, dass die Bürsten mit vertretbarem Aufwand aus dem Gehäuse entnommen und ausgetauscht werden können. Gleichzeitig muss sichergestellt sein, dass im regulären Betrieb ein ausreichender Kontakt zwischen Bürsten und Kommutator besteht, um eine sichere Stromübertragung zu gewährleisten.

Die US 2002/0125786 A1 zeigt eine elektrisch angetriebene Handwerkzeugmaschine, welche mit einer Kommutatoreinrichtung mit einem Bürstenhalter, einer Bürste und einem Federelement versehen ist. Die Bürste ist im Bürstenhalter verstellbar gehalten und wird durch das Federelement kraftbeaufschlagt. Das Federelement ist im Bürstenhalter aufgenommen, welcher in eine Ausnehmung im Gehäuse der Handwerkzeugmaschine einsetzbar ist. Die Kommutatoreinrichtung wird von einem lösbaren Gehäusedeckel überdeckt.

Aus der JP 2007 015063 A ist es bekannt, in einer Werkzeugmaschine eine Kommutatoreinrichtung für einen elektrischen Antriebsmotor mit einer federkraftbeaufschlagten Bürste im Gehäuse der Werkzeugmaschine so anzuordnen, dass das Federelement an einem Trägerteil angeordnet ist, welches in das Gehäuse einsetzbar und von einem Deckel übergriffen ist Die Bürste ist in einem gehäuseseitigen Bürstenhalter verschiebbar gelagert.

Aus der JP 2000 324765 A ist ein Kommutatormotor bekannt, der an einer schwenkbar gelagerten Klappe eine Spiralfeder aufweist, die im geschlossenen Zustand eine Bürste, die in einem gehäuseseitigen Bürstenhalter aufgenommen ist, in Richtung auf einen Kommutator kraftbeaufschlagt Es handelt sich bei aber nicht um eine Werkzeugmaschine, sondern nur um den Kommutatormotor selbst. Der Deckel ist im Motorgehäuse und nicht im Gehäuse einer Handwerkzeugmaschine angeordnet.

### Offenbarung der Erfindung

Der Erfindung liegt die Aufgabe zugrunde, eine elektrisch antreibbare Handwerkzeugmaschine so auszubilden, dass mit einfachen Maßnahmen ein Bürstenwechsel durchgeführt werden kann.

Diese Aufgabe wird erfindungsgemäß mit den Merkmalen des Anspruches 1 gelöst. Die Unteransprüche geben zweckmäßige Weiterbildungen an.

Die erfindungsgemäße Handwerkzeugmaschine weist einen elektrischen Antriebsmotor auf, der als Kommutatormotor mit einer Bürste zur Stromübertragung auf einen Kommutator ausgebildet ist. Im Gehäuse der Handwerkzeugmaschine ist ein lösbarer Deckel vorgesehen, der Träger eines Federelementes ist, welches im montierten Zustand die Bürste mit Federkraft in Richtung auf den Kommutator beaufschlagt.

Diese Ausführung ermöglicht es zum einen, mit der Demontage des Deckels, welcher eine Öffnung im Gehäuse verschließt, zugleich das Federelement zu entfernen, das am Deckel gehalten ist. Damit entfällt ein zusätzlicher Arbeitsschritt, bei dem ansonsten das Federelement erst nach dem Abnehmen des Deckels aus dem Gehäuse der Handwerkzeugmaschine entnommen wird. Die Entnahme des Federelementes ist aber für den Zugang zur Bürste sowie der Entnahme der Bürste zwingende Voraussetzung.

Es ist aber auch möglich, die Feder nicht aus dem Gerät zu entnehmen, sondern nach dem Öffnen des Deckels anzuheben und neben der Kohlebürste in einer Art Parkposition zu positionieren, woraufhin die Kohlebürste aus dem Köcher entnommen werden kann.

Zum andern wird mithilfe des Federelementes eine ausreichend hohe Kraft erzeugt, die auf die Bürste wirkt und diese in Richtung auf den Kommutator kraftbeaufschlagt, so dass ein hinreichend guter Kontakt zwischen Bürste und Kommutator und damit auch eine funktionierende Stromversorgung im Anker, mit dem der Kommutator umläuft, zur Erzeugung eines elektromagnetischen Wechselfeldes sichergestellt ist.

Ein weiterer Vorteil liegt darin, dass die auf der Innenseite des Deckels angeordnete Feder aufgrund ihrer Vorspannung den Deckel mit einer anhebenden Reaktionskraft beaufschlagt, die der auf die Bürste wirkenden Kraft entgegengesetzt ist. Dies hat zur Folge, dass der Deckel durch die Kraft des Federelementes angehoben wird, sobald der Verschluss des Deckels gelöst wird. Es bedarf somit keiner weiteren Werkzeuge, um den Deckel und damit auch das am Deckel gehaltene Federelement zu entnehmen.

Nach dem Entfernen des Deckels und des Federelementes liegt die Bürste innerhalb des Gehäuses frei zugänglich und kann für Wartungszwecke entnommen werden. Gemäß einer weiteren Ausführung kann es aber auch zweckmäßig sein, die Bürste ebenso wie das Federelement auf der Innenseite des Deckels zu halten, wofür vorteilhafterweise eine Bürstenhalterung bzw. ein Teil einer Bürstenhalterung am Deckel vorgesehen ist. Diese Bürstenhalterung erlaubt zumindest im geringen Umfang eine Relativbewegung zwischen der aufgenommenen Bürste und dem Deckel, um unter der Einwirkung des Federelementes gegen den Kommutator gedrückt werden zu können.

Möglich ist es auch, ein auswechselbares Modul aus Bürstenhalter, Feder und Deckel auszubilden. Die Stromversorgung kann dann beispielsweise über eine Steckzunge zwischen der Handwerkzeugmaschine und diesem Modul erzeugt werden.

Gemäß einer vorteilhaften Weiterbildung ist am Deckel eine Trägerplatte angeordnet, die Träger des Federelementes ist. Diese Trägerplatte, die vorzugsweise einteilig mit dem Deckel ausgebildet ist, gegebenenfalls aber auch ein separates und mit dem Deckel zu verbindendes Bauteil bildet, erstreckt sich vorzugsweise in einer Ebene senkrecht zum Deckel. An der Trägerplatte kann ein Haltezapfen angeordnet sein, der zur Aufnahme des Federelementes dient. Die Trägerplatte ist bevorzugt einteilig mit dem Deckel ausgebildet, der zweckmäßigerweise als Kunststoff-Spritzgussbauteil ausgeführt ist. Darüber hinaus kann am Deckel ein bevorzugt ebenfalls einteilig ausgebildeter Dom zur Aufnahme einer Schraube angeordnet sein, um den Deckel in der montierten Position fest mit dem Gehäuse zu verbinden. Der Haltezapfen, der an der Trägerplatte zur Halterung des Federelementes vorgesehen ist, kann dagegen aus einem anderen Material bestehen, insbesondere aus Metall. Gleiches gilt für einen Anschlag an der Trägerplatte, der zur Begrenzung der Rückstellbewegung des Federelementes angeordnet ist. Der Anschlag ist beispielsweise als Stift oder Zapfen oder dergleichen ausgebildet.

Die sich in Richtung Gehäuseinneres erstreckende Trägerplatte, die zumindest näherungsweise senkrecht zur Deckelebene liegt, ist vorteilhafterweise mit dem Dom verbunden, wodurch die Stabilität der Trägerplatte insbesondere in Bezug auf Biegekräfte verbessert wird. Die Trägerplatte bietet genügend Raum zum Anbringen und Haltern des Federelementes sowie des Haltezapfens und des Anschlages.

Gemäß einer weiteren vorteilhaften Ausführung ist das Federelement als Spiralfeder ausgebildet, die zentrisch auf den Haltezapfen aufgeschoben wird, so dass die Drehachse der Spiralfeder mit der Achse des Haltezapfens zusammenfällt. Der Anschlag dient dazu, die Rückstellbewegung der Spiralfeder zu begrenzen, so dass diese mit einer Vorspannkraft in das Gehäuse eingeführt werden kann. Nach dem Einsetzen und Befestigen des Deckels am Gehäuse liegt das freie Ende des Federelementes an der Bürste auf und beaufschlagt diese mit einer Kraft in Richtung auf den Kommutator.

Weitere Vorteile und zweckmäßige Ausführungen sind den weiteren Ansprüchen, der Figurenbeschreibung und den Zeichnungen zu entnehmen. Es zeigen:
- Fig. 1: eine Ansicht eines Winkelschleifers, dessen Werkzeug von einem als Universalmotor ausgebildeten Elektromotor angetrieben wird, mit einer Darstellung des Ankers des Elektromotors und des damit verbundenen Kommutators, an dem eine Bürste zur Stromübertragung anliegt, welche von einer Spiralfeder kraftbeaufschlagt wird, die an einem lösbaren Deckel gehalten ist,
- Fig. 2: eine Einzeldarstellung des Deckels mit einer Trägerplatte, die sich auf der Unterseite des Deckels erstreckt,
- Fig. 3: eine Fig. 2 entsprechende Darstellung, jedoch mit zusätzlicher Spiralfeder, die auf einen Haltezapfen an der Trägerplatte aufgesetzt ist,
- Fig. 4: eine Fig. 3 entsprechende Darstellung, jedoch mit zusätzlicher eingetragener Bürste, die von der Spiralfeder kraftbeaufschlagt wird,
- Fig. 5: eine perspektivische Darstellung der Unterseite des Deckels,
- Fig. 6: eine Ansicht auf die Unterseite des Deckels,
- Fig. 7: der Deckel in einer modifizierten Ausführung, in der die Trägerplatte auf der Unterseite des Deckels schräg verläuft,
- Fig. 8: eine Darstellung des aufgeschwungenen Deckels im Gehäuse der Handwerkzeugmaschine,
- Fig. 9: eine Einzeldarstellung des Haltezapfens zur Aufnahme der Spiralfeder,
- Fig. 10: der Deckel in einer modifizierten Ausführung mit zusätzlichen Führungspins, welche im montierten Zustand in zugeordnete Ausnehmungen im Gehäuse einragen,
- Fig. 11: eine Ansicht der Unterseite des Deckels nach Fig. 10.

In den Figuren sind gleiche Bauteile mit gleichen Bezugszeichen versehen.

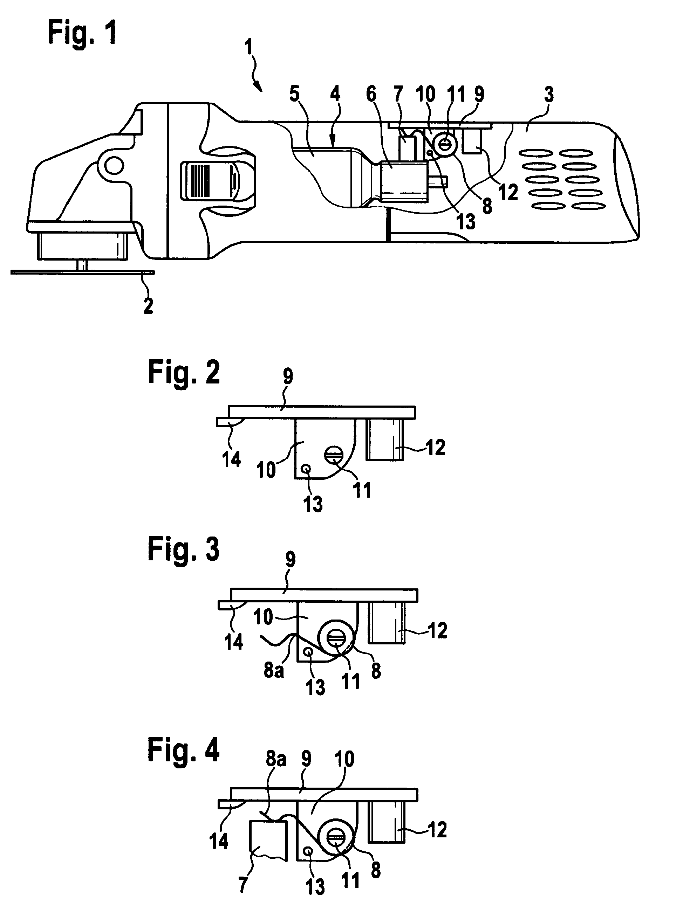

Bei der in Fig. 1 dargestellten Handwerkzeugmaschine handelt es sich um einen Winkelschleifer 1, dessen schematisch eingetragenes Werkzeug 2 über ein nicht dargestelltes Getriebe vom Anker 5 eines Elektromotors 4 angetrieben wird, welcher als Universalmotor ausgebildet ist. Mit dem Anker 5 ist ein Kommutator 6 verbunden, an dem eine gehäusefest gehaltene Bürste 7, die sich aber zweckmäßigerweise in Axialrichtung bewegen kann, gleitend aufliegt, um Strom auf die Wicklung des Ankers 5 zu übertragen. Die Bürste 7 wird von der Kraft einer Spiralfeder 8 in Richtung auf den Kommutator 6 beaufschlagt, um einen ausreichenden Kontakt zwischen Bürste und Kommutator während des laufenden Betriebs sicherzustellen. Die Spiralfeder 8 ist an einem Deckel 9 gehalten, der lösbar im Gehäuse 3 des Winkelschleifers 1 aufgenommen ist. Dieser Deckel 9 besitzt auf seiner dem Gehäuseinneren zugewandten Unterseite eine Trägerplatte 10, an der ein Haltezapfen 11 angeordnet ist, welcher Träger der Spiralfeder 8 ist, indem die Spiralfeder 8 auf den Haltezapfen 11 aufgeschoben wird, so dass die Drehachse der Spiralfeder mit der Achse des Haltezapfens zusammenfällt. Der Deckel 9 ist über einen Dom 12, der zur Aufnahme einer Schraube vorgesehen ist, fest mit dem Gehäuse 3 der Werkzeugmaschine zu verbinden. Vorgesehen ist außerdem an der Trägerplatte 10 ein als Bolzen ausgeführter Anschlag 13, der die Funktion hat, die Rückstellbewegung der Spiralfeder 8 zu begrenzen.

Wie Fig. 2 zu entnehmen, ist an einer Stirnseite des Deckels 9 eine überstehende Führungsnase 14 angeformt, die im montierten Zustand des Deckels in eine zugeordnete Ausnehmung im Gehäuse der Handwerkzeugmaschine eingreift. Des Weiteren geht aus Fig. 2 hervor, dass die Trägerplatte 10 sich etwa senkrecht zur Ebene des Deckels 9 erstreckt. Zweckmäßigerweise ist der Deckel 9 als Kunststoff-Spritzgussbauteil ausgeführt und sind die Führungsnase 14, die Trägerplatte 10 und der Dom 12 zur Aufnahme einer Schraube einteilig mit dem Deckel ausgebildet. Der Haltezapfen 11 sowie der als Bolzen oder dergleichen ausgeführte Anschlag 13 können als eigenständige Bauteile ausgebildet sein, bestehen beispielsweise aus Metall und sind mit der Trägerplatte 10 verbunden, beispielsweise in Ausnehmungen in der Trägerplatte eingesteckt.

In Fig. 3 ist die Spiralfeder 8 auf den Haltezapfen 11 aufgesteckt. Ein freier Schenkel 8a der Spiralfeder 8 liegt an dem Anschlag 13 an, der der weiteren Ausstellbewegung des Schenkels 8a entgegensteht. Der Anschlag 13 verhindert, dass sich die Spiralfeder unter der Wirkung ihrer Eigenspannung loswickelt.

In Fig. 4 beaufschlagt das freie Ende des Schenkels 8a der Spiralfeder 8 die Kohlenbürste 7 und drückt diese gegen den Kommutator 6 (Fig. 1), so dass während des Umlaufens des Ankers 4 ein ständiger Kontakt zwischen Bürste und Kommutator zur Stromübertragung gewährleistet ist. Bei eingesetztem Deckel 9 liegt das freie Ende des Schenkels 8a auf der Oberseite der Bürste 7 auf, in diesem Zustand ist der Schenkel 8a von dem Anschlag 13 abgehoben, so dass die Kraft der Spiralfeder nicht vom Anschlag 13 aufgenommen wird, sondern vielmehr vollständig auf die Bürste 7 übertragen wird. Dies hat zugleich den Vorteil, dass mit dem Lösen der Befestigung des Deckels 9 vom Gehäuse, also üblicherweise mit dem Lösen der durch den Dom geführten Schraube, der Deckel 9 durch die Reaktionskraft der Spiralfeder 8 aus der Aufnahme im Gehäuse angehoben wird und dadurch leicht ergriffen werden kann.

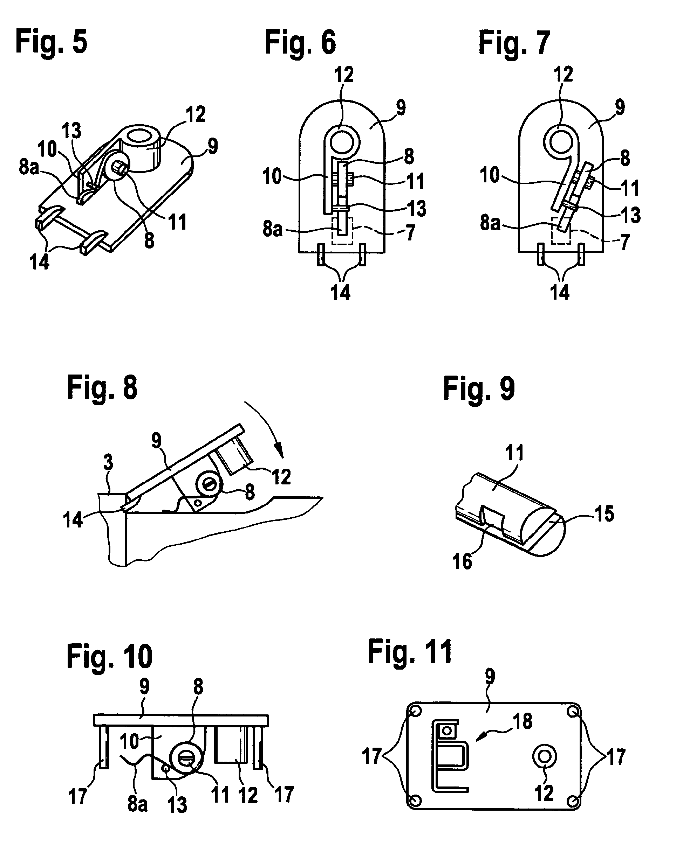

In Fig. 5 und 6 ist ein Deckel 9 in zwei verschiedenen Perspektiven dargestellt. Gut zu erkennen ist aus Fig. 5, dass die Trägerplatte 10 senkrecht zur Ebene des Deckels 9 liegt. Darüber hinaus ist die Trägerplatte 10 mit dem Dom 12 verbunden, die Trägerplatte 10 grenzt tangential an den Dom 12, wodurch ihr zusätzliche Stabilität verliehen wird. Die Trägerplatte 10 verläuft in Längsrichtung des etwa rechteckförmig ausgebildeten Deckels 9.

In Fig. 7 ist eine Ausführungsvariante dargestellt, bei der die Trägerplatte 10 bezogen auf die Längsrichtung des Deckels 9 schräg bzw. winklig angeordnet ist und etwa einen Winkel von 30° gegenüber der Längsachse des Deckels 9 einschließt. Die winklige Anordnung hat zur Folge, dass auch die Spiralfeder 8 im gleichen Winkel zur Längsachse liegt.

In Fig. 8 ist der Deckel 9 in einem aufgeschwungenen Zustand dargestellt. Die Führungsnasen 14, welche an einer Stirnseite des Deckels 9 angeordnet sind, greifen in zugeordnete Ausnehmungen im Gehäuse 3 der Werkzeugmaschine ein, wodurch ein Scharnier gebildet ist, mit einer Scharnierachse, um die der Deckel 9 auf- und zugeklappt werden kann.

In Fig. 9 ist der Haltezapfen 11, welcher zur Aufnahme der Spiralfeder 8 vorgesehen ist, in vergrößerter Einzeldarstellung gezeigt. In die Stirnseite des Haltezapfens 11 ist ein mittiger, axial verlaufender Schlitz 15 eingebracht, der zur Aufnahme eines Endes der Spiralfeder vorgesehen ist, so dass dieses Ende der Spiralfeder drehfest mit dem Haltezapfen 11 verbunden ist. In die Mantelfläche des Haltezapfens 11 ist eine Kerbe 16 eingebracht, die auf Abstand zur freien Stirnseite des Zapfens liegt und als Axialsicherung für die Spiralfeder fungiert.

Im Ausführungsbeispiel nach den Fig. 10 und 11 sind einteilig mit dem Deckel 9 Führungspins 17 ausgebildet, die sich senkrecht zur Ebene des Deckels erstrecken und an jedem Eck des Deckels angeordnet sind. In der montierten Position ragen diese Führungspins 17 in zugeordnete Ausnehmungen im Gehäuse ein und fixieren damit den Deckel. Zusätzlich wird über die Schraube im Dom 12 eine endgültige Befestigung am Gehäuse erreicht.

Gemäß Fig. 11 ist auf der Unterseite des Deckels eine Bürstenhalterung 18 angeordnet, die zur Halterung und Aufnahme der Bürste vorgesehen ist. Die Bürstenhalterung 18 ist als eigenständiges Bauteil ausgeführt, welches an der Unterseite des Deckels 9 befestigt wird. Die Befestigung erfolgt vorteilhafterweise in der Art, dass die Bürste innerhalb der Bürstenhalterung 18 in Wirkrichtung des Federelementes einen zumindest kleinen Weg zurücklegen kann und dadurch von dem Federelement gegen den Kommutator gedrückt werden kann.

Die Feder muss einen gewissen Weg zurücklegen können, da damit die I,ebensdauer/Standzeit der Kohlebürste beschrieben wird. Die Kohlebürste unterliegt beispielsweise bei kleinen Winkelschleifern in der Regel einem Verschleiß von 5 bis 7 mm, so dass auch die Feder über diese 5 bis 7 mm einen Kraft auf die Bürste ausüben können sollte. Bei größeren Geräten wird der Weg dementsprechend größer.

## Patentansprüche

1. Elektrisch antreibbare Handwerkzeugmaschine, mit einem in einem Gehäuse (3) der Handwerkzeugmaschine aufgenommenen elektrischen Antriebsmotor (4),
der als Kommutatormotor mit einer Bürste (7) zur Stromübertragung auf einen Kommutator (6) ausgebildet ist,
**dadurch gekennzeichnet, dass** im Gehäuse (3) ein lösbarer Deckel (9) aufgenommen ist, der Träger eines Federelements (8) ist, welches im montierten Zustand die Bürste (7) mit Federkraft in Richtung auf den Kommutator (6) beaufschlagt, und dass am Deckel (9) ein Bürstenhalter (18) zur Halterung der Bürste (7) angeordnet ist.

2. Handwerkzeugmaschine nach Anspruch 1,
**dadurch gekennzeichnet, dass** am Deckel (9) eine Trägerplatte (10) angeordnet ist, die Träger des Federelements (8) ist.

3. Handwerkzeugmaschine nach Anspruch 2,
**dadurch gekennzeichnet, dass** die Trägerplatte (10) sich senkrecht zur Ebene des Deckels (9) erstreckt.

4. Handwerkzeugmaschine nach Anspruch 2 oder 3,
**dadurch gekennzeichnet, dass** an der Trägerplatte (10) ein Haltezapfen (11) zur Aufnahme des Federelements (8) angeordnet ist.

5. Handwerkzeugmaschine nach einem der Ansprüche 2 bis 4,
**dadurch gekennzeichnet, dass** an der Trägerplatte (10) ein Anschlag (13) zur Begrenzung der Ausstellbewegung des Federelements (8) angeordnet ist.

6. Handwerkzeugmaschine nach einem der Ansprüche 1 bis 5,
**dadurch gekennzeichnet, dass** am Deckel (9) ein Dom (12) zur Aufnahme einer Schraube angeordnet ist.

7. Handwerkzeugmaschine nach einem der Ansprüche 2 bis 6,
**dadurch gekennzeichnet, dass** die Trägerplatte (10) mit dem Dom (12) verbunden ist.

8. Handwcrkzeugmaschine nach einem der Ansprüche 2 bis 7,
**dadurch gekennzeichnet, dass** der Deckel (9), die Trägerplatte (10) und der Dom (12) als einteiliges Spritzgussbauteil ausgeführt sind.

9. Handwerkzeugmaschine nach einem der Ansprüche 1 bis 8,
**dadurch gekennzeichnet, dass** das Federelement als Spiralfeder (8) ausgebildet ist

10. Handwerkzeugmaschine nach einem der Ansprüche 1 bis 9,
**dadurch gekennzeichnet, dass** am Deckel (9) überstehende Führungsnasen (14) angeformt sind, die im montierten Zustand in zugeordnet Ausnehmungen im Gehäuse (3) einragen.

## Claims

1. Electrically driven hand-held power tool, comprising an electric drive motor (4) which is accommodated in a housing (3) of the hand-held power tool and is designed as a commutator motor having a brush (7) for current transfer to a commutator (6),
**characterized in that** a detachable lid (9) is accommodated in the housing (3), said detachable lid (9) being a support for a spring element (8) which in the fitted state applies a spring force to the brush (7) in the direction of the commutator (6), and **in that** a brush holder (18) for retaining the brush (7) is arranged on the lid (9).

2. Hand-held power tool according to Claim 1,
**characterized in that** a support plate (10) which is a support for the spring element (8) is arranged on the lid (9).

3. Hand-held power tool according to Claim 2,
**characterized in that** the support plate (10) extends perpendicularly to the plane of the lid (9).

4. Hand-held power tool according to Claim 2 or 3,
**characterized in that** a retaining pin (11) for accommodating the spring element (8) is arranged on the support plate (10).

5. Hand-held power tool according to one of Claims 2 to 4,
**characterized in that** a stop (13) for limiting the opening movement of the spring element (8) is arranged on the support plate (10).

6. Hand-held power tool according to one of Claims 1 to 5,
**characterized in that** a boss (12) for accommodating a screw is arranged on the lid (9).

7. Hand-held power tool according to one of Claims 2 to 6,
**characterized in that** the support plate (10) is connected to the boss (12).

8. Hand-held power tool according to one of Claims 2 to 7,
**characterized in that** the lid (9), the support plate (10) and the boss (12) are embodied as a one-piece injection-moulded component.

9. Hand-held power tool according to one of Claims 1 to 8,
**characterized in that** the spring element is designed as a spiral spring (8).

10. Hand-held power tool according to one of Claims 1 to 9, **characterized in that** projecting guide lugs (14) are integrally formed on the lid (9), said guide lugs (14) projecting in the fitted state into associated recesses in the housing (3).

## Revendications

1. Machine-outil à main à commande électrique, comprenant un moteur d'entraînement électrique (4) reçu dans un boîtier (3) de la machine-outil à main, qui est réalisé sous forme de moteur de commutateur avec un balai (7) pour le transfert du courant à un commutateur (6),
**caractérisée en ce qu'**un couvercle amovible (9) est reçu dans le boîtier (3), lequel constitue le support d'un élément de ressort (8) qui, dans l'état monté, sollicite le balai (7) avec une force de ressort dans la direction du commutateur (6), et **en ce qu'**un porte-balai (18) est disposé sur le couvercle (9) pour retenir le balai (7).

2. Machine-outil à main selon la revendication 1,
**caractérisée en ce qu'**une plaque support (10) est disposée sur le couvercle (9), laquelle constitue le support de l'élément de ressort (8).

3. Machine-outil à main selon la revendication 2,
**caractérisée en ce que** la plaque support (10) s'étend perpendiculairement au plan du couvercle (9).

4. Machine-outil à main selon la revendication 2 ou 3,
**caractérisée en ce qu'**un tourillon de retenue (11) est disposé sur la plaque support (10) pour recevoir l'élément de ressort (8).

5. Machine-outil à main selon l'une quelconque des revendications 2 à 4,
**caractérisée en ce qu'**une butée (13) est disposée sur la plaque support (10) pour limiter le mouvement de sortie de l'élément de ressort (8).

6. Machine-outil à main selon l'une quelconque des revendications 1 à 5,
**caractérisée en ce qu'**un dôme (12) est disposé sur le couvercle (9) pour recevoir une vis.

7. Machine-outil à main selon l'une quelconque des revendications 2 à 6,
**caractérisée en ce que**
la plaque support (10) est connectée au dôme (12).

8. Machine-outil à main selon l'une quelconque des revendications 2 à 7,
**caractérisée en ce que** le couvercle (9), la plaque support (10) et le dôme (12) sont réalisés sous forme de composant moulé par injection d'une seule pièce.

9. Machine-outil à main selon l'une quelconque des revendications 1 à 8,
**caractérisée en ce que** l'élément de ressort est réalisé sous forme de ressort spiral (8).

10. Machine-outil à main selon l'une quelconque des revendications 1 à 9,
**caractérisée en ce que** des nez de guidage (14) en saillie sont façonnés sur le couvercle (9), lesquels pénètrent dans l'état monté dans des évidements associés dans le boîtier (3).
